(19) **Europäisches Patentamt / European Patent Office / Office européen des brevets**

(11) **EP 2 607 917 B1**

(12) **FASCICULE DE BREVET EUROPEEN**

(45) Date de publication et mention
de la délivrance du brevet:
**05.10.2016 Bulletin 2016/40**

(51) Int Cl.:
**G01S 3/74** *(2006.01)* **G01S 5/04** *(2006.01)*
**H01Q 21/24** *(2006.01)*

(21) Numéro de dépôt: **12198200.3**

(22) Date de dépôt: **19.12.2012**

(54) **Procédé et système pour localiser un ou plusieurs émetteurs en présence d'un réseau d'antennes à diversité de polarisation**

Verfahren und System zum Lokalisieren von einem oder mehreren Sendern innerhalb eines Antennennetzes mit Antennen unterschiedlicher Polarisierung

Method and system for locating one or more transmitters in the presence of an array of antennas with a variety of polarisations

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2011 FR 1103947**

(43) Date de publication de la demande:
**26.06.2013 Bulletin 2013/26**

(73) Titulaire: **Thales**
**92400 Courbevoie (FR)**

(72) Inventeurs:
• **FERREOL, Anne**
**92230 GENNEVILLIERS (FR)**

• **HEURGUIER, Dominique**
**92230 GENNEVILLIERS (FR)**
• **ROGIER, Jean-Luc**
**92230 GENNEVILLIERS (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A2-2007/047119    US-B1- 7 242 350**
**US-B2- 7 952 521**

EP 2 607 917 B1

## Description

L'invention concerne un procédé et un système pour localiser un ou plusieurs émetteurs fixes en présence d'un réseau d'antennes à diversité de polarisation à partir du défilement d'un porteur en mouvement en utilisant des mesures de vecteurs directeurs correspondant à la réponse du réseau d'antennes installé sur le porteur à un émetteur de direction $(\theta, \Delta)$ et de polarisation p. L'invention s'applique aux réseaux d'antennes où les capteurs (ou antennes) sont à diversité de polarisation.

Le mot porteur désigne dans la présente description un aéronef, un avion, un véhicule équipé d'un réseau de capteurs et d'un dispositif de traitement des signaux émis par les émetteurs à localiser.

Les mots «émetteur» et «source» sont utilisés dans la présente description pour désigner un même objet.

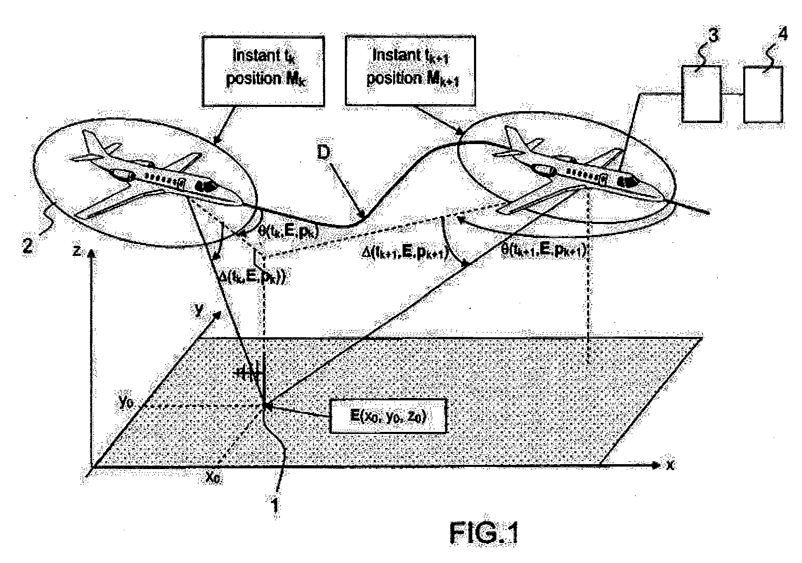

Sur la figure 1, l'émetteur 1 à localiser est à la position $\mathbf{E}(x_0, y_0, z_0)$ et le porteur 2, un avion dans cet exemple, est à l'instant $t_k$ à la position $\mathbf{M}_k(x_k, y_k, z_k)$ et reçoit l'émetteur sous l'incidence $\Theta_k = (\theta(t_k, \mathbf{E}), \Delta(t_k, \mathbf{E}))$ et avec la polarisation $\mathbf{p}_k$. L'incidence $\Theta_k$ de l'émetteur évolue au cours du temps et dépend de la position $\mathbf{E}$ de l'émetteur ainsi que de la trajectoire D de l'avion. La polarisation incidente $\mathbf{p}_k$ dépend de l'incidence $\Theta_k$ ainsi que de paramètres caractéristiques de l'antenne d'émission. Plus précisément, en présence d'un dipôle, ces paramètres sont les 3 composantes de l'orientation du dipôle. Le porteur est équipé d'un réseau de capteurs Ci ou réseau 3 d'antennes associé à un dispositif 4 de traitement des signaux reçus comprenant, entre autre, un processeur.

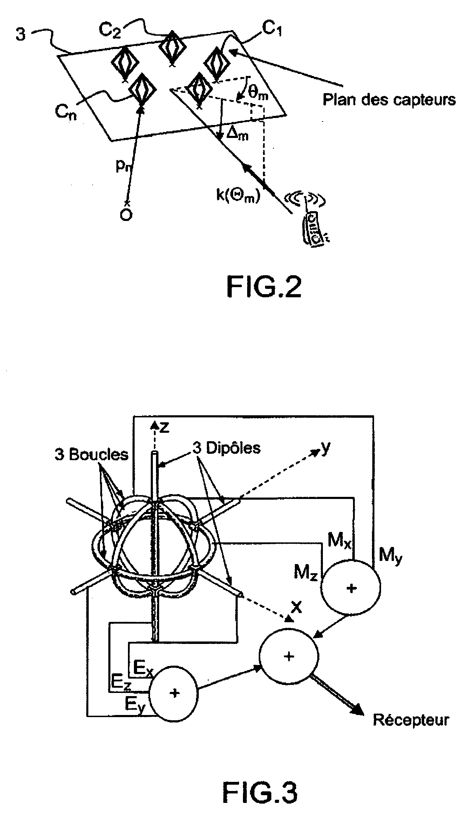

Les angles d'incidences $\theta_m = \theta(t_k, \mathbf{E})$ et $\Delta_m = \Delta(t_k, \mathbf{E})$ sont définis pour un m-ième émetteur $\mathbf{E}_m$ dans le repère du réseau de $N$ antennes ou capteurs $C_1, ... C_N$, installés sous l'avion comme le montre la figure 2.

Les antennes du réseau reçoivent les sources ou émetteurs avec une phase et une amplitude dépendantes de l'angle d'incidence des émetteurs, de la position des antennes du réseau de réception, ainsi que de la polarisation incidente qui dépend de l'incidence et des caractéristiques radioélectriques de l'antenne d'émission.

Le problème technique posé est celui de l'estimation de la position $\mathbf{E}$ d'un émetteur 1 à partir de vecteurs directeurs $\mathbf{a}_k$ mesurés au niveau du porteur 2 à chaque instant $t_k$. Un vecteur directeur à l'instant $t_k$ est la réponse du réseau 3 d'antennes à la direction $\Theta_k$ et à la polarisation incidente $\mathbf{p}_k$ de l'émetteur.

L'art antérieur décrit différents procédés permettant d'estimer la position des émetteurs à partir d'un flux de vecteurs directeurs mesurés au cours du temps sur un véhicule en mouvement. Ces procédés tels que ceux décrits dans les brevets US 7 400 297, US 7 907 089, US 7 952 521 supposent que la position des émetteurs est fixe. Dans les documents US 7 400 297 et US 7 907 089, on fait l'hypothèse que le réseau d'antennes dépend uniquement de la position des antennes, les procédés ne permettent donc pas de prendre en compte la polarisation de l'onde incidente dans le processus de géolocalisation.

Le document WO 2007/047119 décrit un procédé utilisant un système interféromètre pour des aéronefs mobiles qui ont un nombre minimum d'antennes d'interception et qui peut obtenir une information de géo localisation fiable pour des émetteurs mobiles, mais ne mentionne pas la prise en compte de la polarisation circulaire de l'onde incidente.

Le document US 7 242 350 décrit utilise une valeur de rapport de polarisation.

Dans les brevets précités, les procédés prennent comme hypothèse que le réseau d'antennes dépend uniquement de la position des antennes et ces procédés ne permettent donc pas de prendre en compte la polarisation de l'onde incidente dans le processus de géo-localisation. L'algorithme de géo-localisation d'un émetteur mis en oeuvre dans ces procédés consiste à construire, à partir des vecteurs directeurs mesurés au cours du temps, un grand vecteur directeur dont le réseau virtuel associé est de la taille de la trajectoire de l'avion. L'estimation de la position de la source émettrice est alors effectuée avec un algorithme de traitement d'antenne de type MUSIC connu de l'Homme du métier. Ces procédés permettent de géolocaliser les émetteurs en mono-polarisation. Ils ne traitent pas le problème du cas de réseaux de réception à diversité de polarisation qui sont sensibles à la polarisation de l'antenne d'émission qui agit sur la détermination de la position de l'émetteur.

L'objet de l'invention concerne un procédé pour estimer la position $\mathbf{E}_m$ d'un émetteur comprenant une antenne d'émission à partir d'un réseau de capteurs en mouvement installé sur un porteur, ledit émetteur comprenant une antenne d'émission, comportant en combinaison au moins les étapes suivantes :

a) on détermine un ensemble de vecteurs directeurs $\{\hat{\mathbf{a}}_{m1}, ..., \hat{\mathbf{a}}_{mL}\}$ corresponddant à la réponse du réseau de capteurs du porteur à un émetteur de position $\mathbf{E}_m$ de directions $(\Theta_k, \Delta_k)$ et de polarisation $\mathbf{p}_k$ pour $1 \leq k \leq L$,
b) on construit un vecteur normalisé $\hat{\mathbf{b}}_{mk}$, correspondant à une mesure bruitée $\hat{\mathbf{a}}_{mk}$ du vecteur directeur qui est la réponse du réseau d'antennes à l'instant $t_k$ d'un émetteur de position $\mathbf{E}_m$ dont l'antenne d'émission est paramétrée par les coefficients $\mathbf{c}_m$ à partir des valeurs estimées des vecteurs directeurs $\{\hat{\mathbf{a}}_{m1}, ..., \hat{\mathbf{a}}_{mL}\}$,
c) on construit un « grand vecteur observation » en considérant L observations pour l'émetteur de position $\mathbf{E}_m$ pour L instants $t_k$ qui se modélise par

$$\hat{\mathbf{b}}_L = \begin{bmatrix} \hat{\mathbf{b}}_{m1} \\ \vdots \\ \hat{\mathbf{b}}_{mL} \end{bmatrix} = \mathbf{b}_L(\mathbf{E}_m, \mathbf{c}_m) + \widetilde{\mathbf{e}}_L \quad \text{avec} \quad \mathbf{b}_L(\mathbf{E}_m, \mathbf{c}_m) = \begin{bmatrix} \mathbf{b}(\mathbf{E}, t_1, \mathbf{c}) \\ \vdots \\ \mathbf{b}(\mathbf{E}, t_L, \mathbf{c}) \end{bmatrix}$$

$\mathbf{c}_m$ correspond aux paramètres de l'antenne de l'émetteur et $\widetilde{\mathbf{e}}_L$ est le bruit de mesure des vecteurs directeurs du réseau de capteurs,

d) on détermine la position $\mathbf{E}_m$ de l'émetteur en recherchant les paramètres $\mathbf{E}_m$ et $\mathbf{c}_m$ de l'antenne d'émission de l'émetteur qui, sur un ensemble des paramètres (E, c), maximise la corrélation entre la mesure $\hat{\mathbf{b}}_L$ du grand vecteur d'observation et le vecteur modélisé $\mathbf{b}_L(\mathbf{E,c})$ paramétré par les valeurs possibles de position **E** et les paramètres c de l'antenne d'émission de l'émetteur à localiser :

$$\left(\hat{\mathbf{E}}_m, \hat{\mathbf{c}}_m\right) = \max_{(\mathbf{E}_m, \mathbf{c}_m)} J_L(\mathbf{E, c}) \quad \text{avec} \quad J_L(\mathbf{E, c}) = \frac{\left|\mathbf{b}_L(\mathbf{E, c})^H \hat{\mathbf{b}}_L\right|^2}{\left(\hat{\mathbf{b}}_L{}^H \hat{\mathbf{b}}_L\right)\left(\mathbf{b}_L(\mathbf{E, c})^H \mathbf{b}_L(\mathbf{E, c})\right)},$$

où H en exposant correspond à la transposée.

Selon une variante de réalisation le procédé comporte une étape où l'on exprime le « grand vecteur d'observation » à l'aide d'une part d'un vecteur $\mathbf{v}_L(\mathbf{E,c},\hat{\mathbf{b}}_L)$ dépendant des positions de l'émetteur et des mesures du vecteur $\mathbf{V}_L(\mathbf{E},\hat{\mathbf{b}}_L)$ et d'autre part des paramètres **c** de modélisation de l'antenne de l'émetteur,

$$\mathbf{v}_L\left(\mathbf{E, c}, \hat{\mathbf{b}}_L\right) = \begin{bmatrix} \hat{\mathbf{b}}_1\left(\mathbf{E, c}, \hat{\mathbf{b}}_{m1}\right) \\ \vdots \\ \hat{\mathbf{b}}_L\left(\mathbf{E, c}, \hat{\mathbf{b}}_{mL}\right) \end{bmatrix} = \mathbf{V}_L\left(\mathbf{E}, \hat{\mathbf{b}}_L\right)\mathbf{c}$$

Puis on estime en modélisant $\mathbf{v}_L(\mathbf{E,c},\mathbf{b}_L) = V_L(\mathbf{E},\hat{\mathbf{b}}_L)\mathbf{c}$, le maximum du critère dépendant uniquement les valeurs de position **E** possibles pour l'émetteur.:

$$\hat{\mathbf{E}}_m = \max_{(\mathbf{E}_m)} C_L^{opt}(\mathbf{E}) \quad \text{sachant} \quad C_L^{opt}(\mathbf{E}) = \max_{\mathbf{c}}\left(\frac{\left|\hat{\mathbf{b}}_L{}^H \mathbf{v}_L\left(\mathbf{E, c}, \hat{\mathbf{b}}_L\right)\right|^2}{\left(\hat{\mathbf{b}}_L{}^H \hat{\mathbf{b}}_L\right)\left(\mathbf{v}_L\left(\mathbf{E, c}, \hat{\mathbf{b}}_L\right)^H \mathbf{v}_L\left(\mathbf{E, c}, \hat{\mathbf{b}}_L\right)\right)}\right)$$

où $\hat{\mathbf{b}}_L$ est le grand vecteur d'observation, $\mathbf{b}_L(\mathbf{E,c})$ le vecteur modélisé paramétré par les valeurs possibles de position **E** et les paramètres **c** de l'antenne d'émission de l'émetteur à localiser afin de déterminer la position $\mathbf{E}_m$ de l'émetteur.

Le critère $C_L^{opt}(\mathbf{E})$ est obtenu, par exemple, en utilisant les propriétés sur les formes quadratiques du critère de Ferrara

Selon un mode de réalisation, on modéliser le vecteur de polarisation en utilisant une matrice dont les composantes correspondent aux réponses en polarisation d'une antenne modélisée par 3 boucles et 3 dipôles et un vecteur constant des paramètres de l'antenne d'émission et l'on exprime la relation de la manière suivante :

$$\mathbf{p}_k = \mathbf{U}(\Theta_k)\mathbf{c} \quad \text{où} \quad \mathbf{c} = \begin{bmatrix} E_x \\ E_y \\ E_z \\ M_x \\ M_y \\ M_z \end{bmatrix}$$

où **c** est un vecteur constant dépendant des paramètres inconnus de l'antenne d'émission et où **U**(Θ) est une matrice de dimension 2x6 dont les composantes correspondent aux incidences connues.

Le procédé peut comporter une étape de détermination des paramètres de l'antenne d'émission à partir de la connaissance de sa position.

L'invention concerne aussi un système pour estimer la position d'un émetteur E à partir d'un réseau de capteurs en mouvement installé sur un porteur, ledit émetteur comprenant une antenne d'émission, ledit porteur comprenant un dispositif de traitement des signaux émis par l'émetteur adapté à exécuter les étapes du procédé présentant l'une des caractéristiques précitées.

Le procédé et le système selon l'invention sont utilisés par exemple pour localiser des sources émettrices dans un réseau de communications.

L'un des objectifs du procédé et du système selon l'invention est de tenir compte du fait que la polarisation incidente $\mathbf{p}_k$ d'un émetteur à localiser varie au cours du temps puisqu'elle dépend de l'incidence $\Theta_k$ de la source ou émetteur laquelle varie, pour un émetteur de position et d'antenne fixe, en fonction du défilement et des variations éventuelles de l'assiette du porteur.

D'autres caractéristiques et avantages de la présente invention apparaîtront mieux à la lecture de la description d'un exemple de réalisation donné à titre illustratif et nullement limitatif, annexé des figures qui représentent :

- La figure 1, un exemple d'architecture du système selon l'invention pour la localisation d'un émetteur à partir d'un avion,
- La figure 2, une représentation d'un réseau de 5 antennes et l'incidence d'un émetteur,
- La figure 3, la modélisation d'une antenne de manière générale,
- La figure 4, la représentation de la polarisation d'une onde incidente,
- Les figures 5A, 5B, les composantes électriques et magnétiques de la polarisation respectivement verticale et horizontale,
- La figure 6, une schématisation d'un dipôle d'orientation u en présence d'une onde de direction k,
- La figure 7, le schéma pour une boucle d'orientation u en présence d'une onde de direction k.

Afin de mieux faire comprendre l'objet revendiqué dans la présente invention, la description qui suit est donnée en association avec la figure 1 qui représente un émetteur 1 dont on cherche à connaître la position **E** à partir d'un avion 2 en défilement équipé d'un réseau antennaire 3 ou de capteurs et d'un dispositif de traitement des signaux, par exemple un processeur 4 adapté à exécuter les étapes du procédé selon l'invention. La position de l'émetteur est dans cet exemple de mise en oeuvre repérée dans un diagramme $x_0$, $y_0$, $z_0$ dans le repère de l'avion.

Pour la mise en oeuvre du procédé selon l'invention on suppose que l'étape d'association de vecteurs directeurs mesurés, pour un même émetteur a été préalablement réalisée en exécutant par exemple les étapes décrites dans le brevet US 7 907 089 permettant d'associer les vecteurs de chacun des émetteurs dans un contexte multi-émetteurs. On dispose donc d'un ensemble de groupes chacun des groupes étant constitué par un émetteur et plusieurs vecteurs de directions pour ce même émetteur.

D'autre part, on connaît la table de calibration du réseau qui revient à connaître la fonction **a**(Θ,**p**) qui relie un vecteur directeur **a** à la direction d'arrivée Θ et à la polarisation **p**.

Les paramètres de l'antenne d'émission de l'émetteur dont on cherche à déterminer la position, dépendent de la modélisation d'une petite antenne quelconque, qui peut se ramener à trois dipôles et trois boucles. La figure 3 montre alors qu'une antenne peut être paramétrée suivant ses composantes électriques ($E_x$, $E_y$, $E_z$) et ses composantes magnétiques ($M_x$, $M_y$, $M_z$) Dans ces conditions, le vecteur de polarisation s'écrit :

$$\mathbf{p}_k = \mathbf{U}(\Theta_k)\mathbf{c} \quad \text{où} \quad \mathbf{c} = \begin{bmatrix} E_x \\ E_y \\ E_z \\ M_x \\ M_y \\ M_z \end{bmatrix} \tag{1}.$$

où **c** est un vecteur constant dépendant des paramètres inconnus de l'antenne d'émission et où $\mathbf{U}(\Theta)$ est une matrice de dimension 2x6 dont les composantes correspondent aux incidences connues.

En notant que la première composante de $\mathbf{p_k}$ est associée à la polarisation V et que la seconde est associée à la polarisation H, les composantes de la première ligne de $\mathbf{U}(\Theta)$ correspondent à la réponse en polarisation V des 3 dipôles et 3 boucles de la modélisation et la seconde ligne correspond aux réponses en polarisation **H** de ses boucles et dipôles. La première colonne de $\mathbf{U}(\Theta)$ correspond au rayonnement d'un dipôle d'orientation x, la deuxième colonne à un dipôle d'orientation y et la troisième colonne à un dipôle d'orientation z. Les quatrième, cinquième et sixième colonnes de $\mathbf{U}(\Theta)$ correspondent aux diagrammes de rayonnement des boucles d'orientations respectives x, y et z. De manière générale, les composantes de la matrice $\mathbf{U}(\Theta)$ correspondent à la réponse en polarisation de l'émetteur.

Le vecteur **c** est constant lorsque l'antenne d'émission de l'émetteur est fixe. Les composantes de c correspondent aux pondérations d'une formation de voie à l'émission d'un réseau virtuel composé de 3 dipôles et 3 boucles. La modélisation de l'équation (1) sera explicitée plus loin dans la description.

Les antennes du réseau de l'avion reçoivent les sources avec une phase et une amplitude dépendantes de l'angle incident des émetteurs, de la position des antennes, ainsi que de la polarisation incidente qui dépend de l'incidence et des caractéristiques radioélectriques de l'antenne d'émission de l'émetteur.

En présence de $M$ sources émettrices, le signal en sortie du réseau de $N$ antennes de l'avion s'écrit de la façon suivante :

$$\mathbf{x}(t+t_k) = \begin{bmatrix} x_1(t) \\ \vdots \\ x_N(t) \end{bmatrix} = \sum_{m=1}^{M} \mathbf{a}(\Theta_{mk}, \mathbf{p}_{mk})\, s_m(t+t_k) + \mathbf{n}(t+t_k) \tag{2}$$

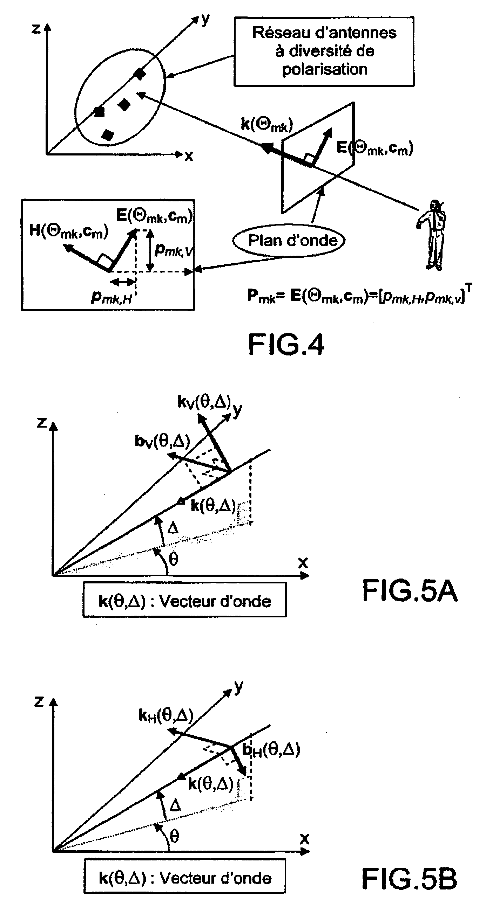

où $x_n(t)$ est le signal reçu sur le $n$-ième capteur $C_n$ du réseau de l'avion, $s_m(t)$ est le signal de la $m$-ième source, $\mathbf{n}(t)$ est le bruit additif, $\Theta_{mk}$ est la direction d'arrivée du $m$-ième émetteur à l'instant $t_k$, $\mathbf{p}_{mk}$ est la polarisation incidente associée (figure 4) et $\mathbf{a}(\Theta_{mk}, \mathbf{p}_{mk})$ est le vecteur directeur de la m-ième source à l'instant $t_k$. Le vecteur $\mathbf{p}_{mk}$ est la direction du champ électrique **E** qui est inclus dans le plan d'onde comme illustré par la figure 4. Le plan d'onde est selon la figure 4 perpendiculaire au vecteur d'onde $\mathbf{k}(\Theta)$ qui s'écrit :

$$\mathbf{k}(\Theta) = \begin{bmatrix} u \\ v \\ w \end{bmatrix} \quad \text{avec} \quad \begin{cases} u = \cos(\theta)\cos(\Delta) \\ v = \sin(\theta)\cos(\Delta) \\ w = \sin(\Delta) \end{cases} \tag{3}.$$

où l'incidence $\Theta = \{\theta, \Delta\}$ dépend de l'azimut et de l'élévation dans le repère de l'avion. La polarisation $\mathbf{p}_{mk}$ est alors une fonction de l'incidence $\Theta_{mk}$ de la source à l'instant $t_k$ ainsi que des paramètres $\mathbf{c}_m$ de l'antenne d'émission selon (1). Le vecteur directeur $\mathbf{a}(\Theta_{mk}, \mathbf{p}_{mk})$ de la m-ième source à l'instant $t_k$ s'écrit en fonction des composantes horizontale et verticale de $\mathbf{p}_{mk}$ qui sont définies équation (1), de la manière suivante :

$$\mathbf{a}(\Theta_{mk}, \mathbf{p}_{mk}) = \mathbf{a}_H(\Theta_{mk})\, p_{mk,H} + \mathbf{a}_V(\Theta_{mk})\, p_{mk,V} = \mathbf{D}(\Theta_{mk})\mathbf{p}_{mk} \quad \text{avec} \quad \mathbf{p}_{mk} = \begin{bmatrix} p_{mk,H} \\ p_{mk,V} \end{bmatrix} \tag{4}.$$

Les vecteurs $\mathbf{a}_H(\Theta)$ et $\mathbf{a}_V(\Theta)$ sont les réponses à une direction $\Theta$ du réseau d'antennes pour des polarisations rectilignes (respectivement horizontale H et verticale V). Un réseau de capteurs est dit à diversité de polarisation lorsque la matrice représentative des vecteurs réponses du réseau d'antennes $\mathbf{D}(\Theta_{mk})$ est de rang 2, la matrice comportant les composantes $\mathbf{a}_H(\Theta)$ et $\mathbf{a}_V(\Theta)$ des vecteurs réponses du réseau d'antennes. Les vecteurs $\mathbf{a}_H(\Theta)$ et $\mathbf{a}_V(\Theta)$ ne sont pas colinéaires ce qui permet d'exploiter la diversité de polarisation de l'émetteur.

Selon la figure 1, la relation entre l'incidence $(\Theta)_k$ d'un émetteur à l'instant $t_k$ et sa position $\mathbf{E}$ est la suivante :

$$\mathbf{k}\left(\Theta_k\right) = \begin{bmatrix} u_k \\ v_k \\ w_k \end{bmatrix} = \mathbf{R}_{\text{avion}}\left(\alpha_k\right) \frac{\overrightarrow{\mathbf{EM_k}}}{\left\|\overrightarrow{\mathbf{EM_k}}\right\|} \qquad (5).$$

Où $\|\overrightarrow{\mathbf{EM_k}}\|$ est la norme d'un vecteur $\overrightarrow{\mathbf{EM_k}}$, $\mathbf{E}$ est la position de l'émetteur, $\mathbf{M}_k$ la position de l'avion à l'instant $t_k$ et $\mathbf{R}_{\text{avion}}(\alpha_k)$ une matrice de rotation dépendante du vecteur d'angle $\mathbf{a}_k$ dont les composantes sont les angles de tangage, roulis et assiette à l'instant $t_k$. Les paramètres $\mathbf{M}_k$ et $\alpha_k$ sont fournis par exemple par la centrale de navigation de l'avion ou encore celle du véhicule ou encore par tout autre moyen adapté. D'après les relations (3) et (5), le lien entre l'azimut et l'élévation et les composantes du vecteur d'onde est alors :

$$\begin{cases} \theta_k = \text{angle}\left(u_k + jv_k\right) \\ \Delta_k = \sin^{-1}\left(w_k\right) \end{cases} \qquad (6).$$

$u_k$, $v_k$, $w_k$ correspondant aux composantes du vecteur d'onde pour l'instant $t_k$ Les relations (5) et (6) définissent alors une fonction exprimant la valeur de l'incidence en fonction de la position de l'émetteur $\mathbf{E}$ et de l'instant $t_k$ telle que :

$$\Theta_k = f\left(\mathbf{E}, t_k\right) \qquad (7).$$

D'autre part, la relation de l'équation (1) indique que le vecteur de polarisation s'écrit $\mathbf{p}_{mk} = U(\Theta_{mk})\mathbf{c}_m$.

Dans ces conditions, le vecteur directeur $\mathbf{a}_{mk} = \mathbf{a}(\Theta_{mk}, \mathbf{p}_{mk})$ dépend de la position $\mathbf{E}_m$ et des paramètres électromagnétiques de l'antenne d'émission $\mathbf{c}_m$ et peut s'exprimer en fonction de la matrice $\mathbf{D}(\Theta_{mk})$ des réponses du réseau à la réception à une direction $\Theta_{mk}$ suivant les polarisations respectives V et H, de la matrice $U(f(\mathbf{E}_m, t_k))$ où $\mathbf{U}(\Theta)$ contient les diagrammes de rayonnement en V et H dans la direction $\Theta$ des 3 dipôles et 3 boucles qui sont les antennes virtuelles du modèle de l'antenne d'émission

$$\begin{aligned} \mathbf{a}_{mk} &= \mathbf{a}\left(\Theta_{mk}, \mathbf{p}_{mk}\right) = \mathbf{D}\left(f\left(\mathbf{E}_m, t_k\right)\right) \mathbf{U}\left(f\left(\mathbf{E}_m, t_k\right)\right) \mathbf{c}_m \\ &= \mathbf{W}\left(\mathbf{E}_m, t_k\right) \mathbf{c}_m \end{aligned} \qquad (8).$$

où $\mathbf{W}(\mathbf{E}_m, t_k)$ est une matrice représentant la matrice de canal de transmission entre un réseau de 3 dipôles et de 3 boucles colocalisés (modélisant l'antenne d'émission) de position $\mathbf{E}_m$ et un réseau d'antennes sur le porteur à l'instant $t_k$ qui est à la position $\mathbf{M}_k$ et a une orientation dans l'espace connue définie par $\alpha_k$.

Le processus pour calculer la matrice de canal $\mathbf{W}(\mathbf{E}, t_k)$ pour une position $\mathbf{E}$ hypothétique d'un émetteur est, par exemple, la suivante :

**Etape A.1 :** calculer le vecteur d'onde $\mathbf{k}(\Theta_k)$ selon l'équation (5) à partir d'une valeur de $\mathbf{E}$ et des paramètres $\alpha_k$ d'orientation du réseau de réception à l'instant $t_k$ qui sont fournis par une centrale de navigation,
**Etape A.2 :** calculer l'incidence $\Theta_k = \{\theta_k, \Delta_k\}$ selon les équations (6) et (7), à ce stade effectué $\Theta_k = f(\mathbf{E}, t_k)$ est effectué,
**Etape A.3 :** calculer la matrice $\mathbf{U}(\Theta_k)$ de dimension 2x6 dont les composantes sont les diagrammes de rayonnement des 3 dipôles et 3 boucles du modèle de l'antenne d'émission suivant les polarisations V et H dans la direction $\Theta_k$. La première ligne de $\mathbf{U}(\Theta_k)$ comporte les diagrammes en polarisation V et la seconde ligne les diagrammes en polarisation H,
**Etape A.4 :** calculer la matrice $\mathbf{D}(\Theta_k) = [\mathbf{a}_V(\Theta_k) \ \mathbf{a}_H(\Theta_k)]$ en lisant dans la table de calibration les vecteurs $\mathbf{a}_V(\Theta)$ et

$a_H(\Theta)$ pour le direction $\Theta = \Theta_k$,

**Etape A.5 :** calculer la matrice $\mathbf{W}(\mathbf{E}, t_k)$ en effectuant $\mathbf{W}(\mathbf{E}, t_k) = \mathbf{D}(\Theta_k)\,\mathbf{U}(\Theta_k)$.

Le procédé a notamment pour objectif d'estimer la position $\mathbf{E}_m$ d'un émetteur à partir d'un ensemble de vecteurs directeurs $\{\hat{\mathbf{a}}_{m1}, ..., \hat{\mathbf{a}}_{mL}\}$ estimés à partir du signal temporel $\mathbf{x}(t + t_k)$ en sortie du réseau d'antennes de l'équation (2), sachant que l'on a constitué au préalable des ensembles de vecteurs $\{\hat{\mathbf{a}}_{m1}, ..., \hat{\mathbf{a}}_{mL}\}$ pour chacun des émetteurs m, en utilisant des procédés connus de l'art antérieur.

**Procédé de localisation en diversité de polarisation**

Les vecteurs $\hat{\mathbf{a}}_{mk}$ sont des estimées erronées des vecteurs directeurs $\hat{\mathbf{a}}_{mk}$ de l'équation (8).

Le modèle de l'écriture du vecteur directeur mesuré s'écrit alors selon (8):

$$\hat{\mathbf{a}}_{mk} = \mathbf{a}\left(\mathbf{E}_m, t_k, \mathbf{c}_m\right) + \mathbf{e}_{mk} \quad \text{avec}$$
$$\text{de manière générale } \mathbf{a}\left(\mathbf{E}, t, \mathbf{c}\right) = \mathbf{W}\left(\mathbf{E}, t\right)\mathbf{c} \tag{9}.$$

où $\mathbf{e}_{mk}$ est un bruit d'estimation et de modélisation et $\mathbf{W}(\mathbf{E}, t)$ une matrice représentant la matrice de canal précitée. A cette étape de modélisation les paramètres de la position $\mathbf{E}$ de l'émetteur ont été séparés à un instant donné t des paramètres $\mathbf{c}$ de l'antenne d'émission.

Dans le procédé, on constitue ensuite un vecteur $\hat{\mathbf{b}}_{mk}$ normalisé correspondant à une mesure bruitée $\hat{\mathbf{a}}_{mk}$ du vecteur directeur qui est la réponse du réseau d'antennes à l'instant $t_k$ d'un émetteur de position $\mathbf{E}_m$ dont l'antenne d'émission est paramétrée par les coefficients $\mathbf{c}_m$:

$$\hat{\mathbf{b}}_{mk} = \frac{\hat{\mathbf{a}}_{mk}}{\hat{\mathbf{a}}_{mk}\left[n_0\right]} \tag{10}$$

où $n_0$ est un capteur de référence fixé à l'avance par le procédé et $\mathbf{a}[i]$ est la $i$-ième composante du vecteur a.

Le modèle de ce vecteur est alors :

$$\hat{\mathbf{b}}_{mk} = \mathbf{b}\left(\mathbf{E}_m, t_k, \mathbf{c}_m\right) + \tilde{\mathbf{e}}_{mk} \quad \text{avec} \quad \mathbf{b}\left(\mathbf{E}, t, \mathbf{c}\right) = \frac{\mathbf{W}\left(\mathbf{E}, t\right)\mathbf{c}}{\mathbf{W}_{n_0}\left(\mathbf{E}, t\right)\mathbf{c}} \tag{11}$$

où $\mathbf{W}_{n0}(\mathbf{E}, t)$ est la $n_0$-ième ligne de $\mathbf{W}(\mathbf{E}, t)$ et $\tilde{\mathbf{e}}_{mk}$ est le vecteur bruit en sortie de la normalisation de l'équation (10). Au premier ordre il vaut $\tilde{\mathbf{e}}_{mk} \approx \hat{\mathbf{e}}_{mk} / \hat{\mathbf{a}}_{mk}[n_0]$

Le procédé va ensuite construire un « grand vecteur observation » en utilisant $L$ mesures de vecteur directeur normalisées :

$$\hat{\mathbf{b}}_L = \begin{bmatrix} \hat{\mathbf{b}}_{m1} \\ \vdots \\ \hat{\mathbf{b}}_{mL} \end{bmatrix} = \mathbf{b}_L\left(\mathbf{E}_m, \mathbf{c}_m\right) + \tilde{\mathbf{e}}_L \quad \text{avec} \quad \mathbf{b}_L\left(\mathbf{E}_m, \mathbf{c}_m\right) = \begin{bmatrix} \mathbf{b}\left(\mathbf{E}, t_1, \mathbf{c}\right) \\ \vdots \\ \mathbf{b}\left(\mathbf{E}, t_L, \mathbf{c}\right) \end{bmatrix} \tag{12}$$

où $\tilde{\mathbf{e}}_L$ est le bruit de la mesure des vecteurs directeurs du réseau mesurés au cours du temps. Il est ainsi composé des vecteurs $\tilde{\mathbf{e}}_{mk}$ du bruit d'estimation et de modélisation de l'équation (11).

Selon le modèle de l'équation (12), l'estimation conjointe de la position $\mathbf{E}_m$ du m-ième émetteur avec les paramètres $\mathbf{c}_m$ de l'antenne d'émission se fait alors de la manière suivante :

$$\left(\hat{\mathbf{E}}_m,\hat{\mathbf{c}}_m\right) = \max_{(\mathbf{E}_m,\mathbf{c}_m)} J_L\left(\mathbf{E},\mathbf{c}\right)$$

$$\text{avec } J_L\left(\mathbf{E},\mathbf{c}\right) = \frac{\left|\mathbf{b}_L\left(\mathbf{E},\mathbf{c}\right)^H \hat{\mathbf{b}}_L\right|^2}{\left(\hat{\mathbf{b}}_L{}^H \hat{\mathbf{b}}_L\right)\left(\mathbf{b}_L\left(\mathbf{E},\mathbf{c}\right)^H \mathbf{b}_L\left(\mathbf{E},\mathbf{c}\right)\right)} \tag{13}$$

Ceci conduit à rechercher sur l'ensemble des positions **E** de l'émetteur et des paramètres de l'antenne d'émission **c,** la valeur maximale du critère **J**$_L$**(E,c)** de l'équation (13) ou encore à rechercher les paramètres **E**$_m$, **c**$_m$ qui, sur l'ensemble des paramètres **E, c,** maximise la corrélation entre la mesure $\hat{\mathbf{b}}_L$ du grand vecteur d'observation et le vecteur **b**$_L$**(E,c)** paramétré par **E** et **c.**

Le critère de l'équation (13) est multidimensionnel et peut se révéler difficile à mettre en oeuvre.

Une manière de remédier à cet inconvénient est de construire un critère issu du principe de l'équation (13) qui présente l'avantage de dépendre seulement de la position **E** de l'émetteur.

Selon une variante de réalisation, le procédé utilise les propriétés quadratiques du principe de Ferrara décrit dans le document de E. R. Ferrara and T. M. Parks, intitulé «Direction finding with an array of antennas having diverse polarizations,» paru au journal IEEE Trans. Antennas. Propagation., vol. 31, pp. 231-236, Mar. 1983.

En supposant que $\tilde{e}_{mk}$ soit nul, on sait d'après (11) que :

$$\hat{\mathbf{b}}_{mk} = \frac{\mathbf{W}_k\left(\mathbf{E}_m\right)\mathbf{c}_m}{\mathbf{w}_k\left(\mathbf{E}_m\right)\mathbf{c}_m} \quad \text{avec} \begin{cases} \mathbf{W}_k\left(\mathbf{E}\right) = \mathbf{W}\left(\mathbf{E},t_k\right) \\ \mathbf{w}_k\left(\mathbf{E}\right) = \mathbf{W}_{n_0}\left(\mathbf{E},t_k\right) \end{cases} \tag{14}$$

D'après cette dernière équation on en déduit que le vecteur $\hat{\mathbf{b}}_k(\mathbf{E}_m,\mathbf{c}_m,\hat{\mathbf{b}}_{mk})$ est une estimée du vecteur $\hat{\mathbf{b}}_{mk}$ associée au vecteur $\hat{\mathbf{b}}_{mk}$ normalisé correspondant au vecteur directeur mesuré $\hat{\mathbf{a}}_{mk}$, réponse du réseau d'antenne à l'instant $t_k$ d'un émetteur de position **E**$_m$ ayant une antenne émettrice de paramètres **c**$_m$:

$$\hat{\mathbf{b}}_{mk} \approx \hat{\mathbf{b}}_k\left(\mathbf{E}_m,\mathbf{c}_m,\hat{\mathbf{b}}_{mk}\right) = \mathbf{W}_k\left(\mathbf{E}_m\right)\mathbf{W}_k\left(\mathbf{E}_m\right)^{\#}\hat{\mathbf{b}}_{mk}\mathbf{w}_k\left(\mathbf{E}_m\right)\mathbf{c}_m \tag{15}$$

où **W**$_k$ (E)$^{\#}$ désigne la pseudo-inverse de **W**$_k$(E).

Selon le modèle de l'équation (12) et la remarque de l'équation (15), l'estimation conjointe de la position **E**$_m$ du m-ième émetteur avec les paramètres **c**$_m$ de l'antenne d'émission peut se faire par une deuxième approche où :

$$\left(\hat{\mathbf{E}}_m,\hat{\mathbf{c}}_m\right) = \max_{(\mathbf{E},\mathbf{c})} C_L\left(\mathbf{E},\mathbf{c}\right)$$

$$\text{avec } C_L\left(\mathbf{E},\mathbf{c}\right) = \frac{\left|\hat{\mathbf{b}}_L{}^H \mathbf{v}_L\left(\mathbf{E},\mathbf{c},\hat{\mathbf{b}}_L\right)\right|^2}{\left(\hat{\mathbf{b}}_L{}^H \hat{\mathbf{b}}_L\right)\left(\mathbf{v}_L\left(\mathbf{E},\mathbf{c},\hat{\mathbf{b}}_L\right)^H \mathbf{v}_L\left(\mathbf{E},\mathbf{c},\hat{\mathbf{b}}_L\right)\right)} \tag{16}$$

et où le vecteur directeur $\mathbf{v}_L(\mathbf{E},\mathbf{c},\hat{\mathbf{b}}_L)$ équivalent qui modélise le vecteur $\hat{\mathbf{b}}_L$ avec $\hat{\mathbf{b}}_L = \mathbf{v}_L(\mathbf{E}_m,\mathbf{c}_m,\hat{\mathbf{b}}_L)+\tilde{e}_L$ s'écrit en séparant les contributions des positions **E** et des paramètres **c** propres à l'antenne de l'émetteur de la manière suivante d'après (15)

$$\mathbf{v}_L\left(\mathbf{E},\mathbf{c},\hat{\mathbf{b}}_L\right) = \begin{bmatrix} \hat{\mathbf{b}}_1\left(\mathbf{E},\mathbf{c},\hat{\mathbf{b}}_{m1}\right) \\ \vdots \\ \hat{\mathbf{b}}_L\left(\mathbf{E},\mathbf{c},\hat{\mathbf{b}}_{mL}\right) \end{bmatrix} = \mathbf{V}_L\left(\mathbf{E},\hat{\mathbf{b}}_L\right)\mathbf{c} \tag{17}$$

où

$$V_L\left(\mathbf{E},\hat{\mathbf{b}}_L\right) = \begin{bmatrix} \mathbf{W}_1(\mathbf{E})\,\mathbf{W}_1(\mathbf{E})^{\#}\,\hat{\mathbf{b}}_{m1}\mathbf{w}_1(\mathbf{E}) \\ \vdots \\ \mathbf{W}_L(\mathbf{E})\,\mathbf{W}_L(\mathbf{E})^{\#}\,\hat{\mathbf{b}}_{mL}\mathbf{w}_L(\mathbf{E}) \end{bmatrix} \tag{18}$$

Pour construire le vecteur directeur et séparer les contributions on ajoute des observations $\hat{\mathbf{b}}_{m1},...,\hat{\mathbf{b}}_{mL}$ dans la matrice. D'après les équations (16)-(18), le critère $C_L(\mathbf{E},\mathbf{c})$ s'écrit de la manière suivante :

$$C_L(\mathbf{E},\mathbf{c}) = \frac{\mathbf{c}^H \mathbf{Q}_1(\mathbf{E})\mathbf{c}}{\mathbf{c}^H \mathbf{Q}_2(\mathbf{E})\mathbf{c}} \quad \text{avec} \quad \begin{cases} \mathbf{Q}_1(\mathbf{E}) = \dfrac{V_L\left(\mathbf{E},\hat{\mathbf{b}}_L\right)^H \hat{\mathbf{b}}_L \hat{\mathbf{b}}_L^{\,H} V_L\left(\mathbf{E},\hat{\mathbf{b}}_L\right)}{\hat{\mathbf{b}}_L^{\,H}\hat{\mathbf{b}}_L} \\[2ex] \mathbf{Q}_2(\mathbf{E}) = V_L\left(\mathbf{E},\hat{\mathbf{b}}_L\right)^H V_L\left(\mathbf{E},\hat{\mathbf{b}}_L\right) \end{cases} \tag{19}$$

Selon le principe de Ferrara précité, le maximum du critère $C_L(\mathbf{E},\mathbf{c})$ pour une position E fixée est en faisant varier les valeurs de c par:

$$C_L^{\,opt}(\mathbf{E}) = \max_{\mathbf{c}} C_L(\mathbf{E},\mathbf{c}) = \lambda_{\max}\left(\mathbf{Q}_2(\mathbf{E})^{-1}\mathbf{Q}_1(\mathbf{E})\right) \tag{20}$$

où $\lambda_{\max}(\mathbf{Q})$ désigne la valeur propre maximum de $\mathbf{Q}$. En conséquence, l'algorithme permettant d'estimer la position de l'émetteur $E_m$ consiste en suite à trouver le maximum sur l'ensemble des positions $\mathbf{E}$ possibles de l'émetteur la valeur maximale du critère qui maximise la corrélation entre la mesure du grand vecteur d'observation $\hat{\mathbf{b}}_L$ et la matrice $V_L(\mathbf{E},\hat{\mathbf{b}}_L)$ paramétré par $\mathbf{E}$ et les mesures $\hat{\mathbf{b}}_L$ et s'exprime de la manière suivante

$$\hat{\mathbf{E}}_m = \max_{\mathbf{E}} C_L^{\,opt}(\mathbf{E}) \quad \text{avec} \quad C_L^{\,opt}(\mathbf{E}) = \lambda_{\max}\left(\mathbf{Q}_2(\mathbf{E})^{-1}\mathbf{Q}_1(\mathbf{E})\right) \tag{21}$$

Selon un mode de réalisation du procédé selon l'invention, après avoir localisé un émetteur, on connait sa position. A partir de cette valeur de position, il est alors possible de trouver la valeur des composantes de l'antenne d'émission $\mathbf{c}_m$ de l'émetteur localisé.

Le vecteur $\hat{\mathbf{c}}_m$ estimé des composantes de l'antenne d'émission est le vecteur propre associé à la valeur propre maximale de la matrice $\hat{\mathbf{Q}}_m$ suivante

$$\hat{\mathbf{Q}}_m = \mathbf{Q}_2\left(\hat{\mathbf{E}}_m\right)^{-1}\mathbf{Q}_1\left(\hat{\mathbf{E}}_m\right) \quad \text{où} \quad \hat{\mathbf{Q}}_m\hat{\mathbf{c}}_m = C_L^{\,opt}\left(\hat{\mathbf{E}}_m\right)\hat{\mathbf{c}}_m \tag{22}$$

Les étapes qui permettent d'estimer le vecteur de position $\hat{\mathbf{E}}_m$ à partir des vecteurs directeurs $\hat{\mathbf{a}}_{mk}$ mesurés au cours du temps pour $1\leq k\leq L$ sont par exemple les suivantes :

**Etape n°B.1** : calculer les vecteur $\hat{\mathbf{b}}_{mk}$ selon l'équation (10) pour $1\leq k\leq L$, c'est-à-dire pour toutes les L mesures composants le grand vecteur,
**Etape n°B.2** : pour toutes les positions possibles $\mathbf{E}$ de l'émetteur, calculer le critère $C_L^{\,opt}(\mathbf{E})$ en exécutant les étapes suivantes :
*Etape n°B.2.1* : calculer des matrices représentatives du canal $\mathbf{W}_k(\mathbf{E})= \mathbf{W}(\mathbf{E},t_k)$ pour $(1\leq k\leq L)$ selon les étapes A.i explicitées précédemment du sous procédé **A,**
*Etape n°B.2.2* : calculer le vecteur de l'équation (12) ou grand vecteur observation à partir des $\hat{\mathbf{b}}_{mk}$ pour$(1\leq k\leq L)$,
*Etape n°B.2.3:* calculer la matrice $V_L(\mathbf{E},\hat{\mathbf{b}}_L)$ du vecteur directeur de l'équation (18) à partir des matrices $\mathbf{W}_k(\mathbf{E})$ et des mesures $\hat{\mathbf{b}}_{mk}$ pour $1\leq k\leq L$,
*Etape n°B.2.4* : calculer le critère d'optimisation $C_L^{\,opt}(\mathbf{E})$ selon l'équation (21),

**Etape n°B.3** : calculer la valeur $\hat{\mathbf{E}}_m$ estimée de la position de l'émetteur en cherchant le maximum de la fonction $C_L^{opt}(\mathbf{E})$ suivant le paramètre $\mathbf{E}$ correspondant aux positions possibles pour l'émetteur,

**Etape n°B.4** : calculer les composantes $\hat{\mathbf{c}}_m$ de l'antenne d'émission à partir de $\hat{\mathbf{E}}_m$ selon l'équation (22).

Les paragraphes qui suivent expliquent comment obtenir l'équation (1) de modélisation paramétrique générale d'une antenne d'émission.

La polarisation $\mathbf{p}= \mathbf{p}_{mk}$ est, selon la figure 1, la direction du vecteur champ électrique $\mathbf{E}$ inscrit dans le plan d'onde qui a la propriété d'être perpendiculaire au vecteur d'onde $\mathbf{k}(\Theta)$. En présence d'une polarisation rectiligne V où $p_{mk,V}$=1 et $p_{mk,H}$=0, le vecteur de polarisation est noté $\mathbf{E}=\mathbf{k_v}$ et en présence d'une polarisation rectiligne H, où $p_{mk,V}$=0 et $p_{mk,H}$=1, le vecteur de polarisation est noté $\mathbf{E}=\mathbf{k_H}$. L'onde se propage avec une composante magnétique $\mathbf{H}$ qui est perpendiculaire au champ électrique $\mathbf{E}$ ainsi que le vecteur d'onde $\mathbf{k}(\Theta)$. Les composantes électriques et magnétiques sont incluses dans le plan d'onde qui est perpendiculaire au vecteur d'onde $\mathbf{k}(\theta,\Delta)$. On note par $\mathbf{b}_v$ et $\mathbf{b}_H$ les orientations respectives du champ magnétique dans les contextes de polarisations respectives V et H. Les vecteurs $\mathbf{k_v}$ et $\mathbf{k_h}$ sont les composantes électriques et $\mathbf{b_v}$ et $\mathbf{b_H}$ les composantes magnétiques. La figure 5A et la figure 5B représentent les composantes électrique et magnétique dans le cas des polarisations V et H.

La figure 5A et la figure 5B montrent que les vecteurs $\mathbf{k_v}$ et $\mathbf{b_H}$ ainsi que $\mathbf{b_v}$ et $\mathbf{k_H}$ sont colinéaires. Suivant les repères définis dans les figures 5A et 5B, ces différents vecteurs s'écrivent :

$$\mathbf{k}_V(\Theta) = -\mathbf{b}_H(\Theta) = \begin{bmatrix} -\cos(\theta)\sin(\Delta) \\ -\sin(\theta)\sin(\Delta) \\ \cos(\Delta) \end{bmatrix} \text{ et } \mathbf{k}_H(\Theta) = \mathbf{b}_V(\Theta) = \begin{bmatrix} -\sin(\theta) \\ \cos(\theta) \\ 0 \end{bmatrix} \qquad (23)$$

D'un point de vue général, les dipôles sont sensibles uniquement à la composante électrique, tandis que les boucles (ou cadres) sont sensibles à la composante magnétique de l'onde électromagnétique.

**Cas d'un dipôle idéal**

Un dipôle idéal est un fil infiniment long et fin qui a la caractéristique d'être sensible uniquement à la composante électrique. En notant par $\mathbf{u}$ le vecteur unité donnant l'orientation du dipôle, les gains $G_V^{dipole}(\Theta)$ et $G_H^{dipole}(\Theta)$ en polarisation V et H vérifient :

$$G_V^{dipole}(\Theta) = \mathbf{k}_V(\Theta)^H \mathbf{u} \quad \text{et} \quad G_H^{dipole}(\Theta) = \mathbf{k}_H(\Theta)^H \mathbf{u} \qquad (24)$$

où $\mathbf{u}^H\mathbf{u}$ =1. Le gain du dipôle a alors l'expression suivante :

$$G^{dipole}(\Theta,\mathbf{p}) = \mathbf{u}^H \mathbf{E}(\Theta,\mathbf{p}) = p_V \times G_V^{dipole}(\Theta) + p_H \times G_H^{dipole}(\Theta) \qquad (25)$$

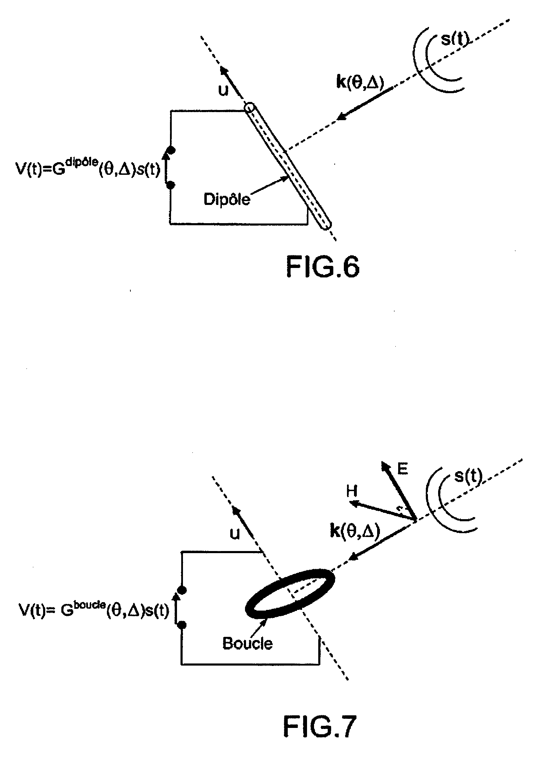

où $\mathbf{p} = [p_H\ p_V]^T$ sachant que $p_V$ et $p_H$ sont respectivement les composantes en polarisation V et H du dipôle. La figure 6 montre que la tension $V(t)$ obtenue aux deux extrémités du dipôle est proportionnelle à $G^{dipole}(\Theta,\mathbf{p})$.

**Cas d'une boucle idéale**

Une boucle idéale a la caractéristique d'être sensible à la composante magnétique uniquement. En notant par u le vecteur unité donnant l'orientation de la boucle, les gains $G_V^{boucle}(\Theta)$ et $G_H^{boucle}(\Theta)$ en polarisation V et H vérifient :

$$G_V^{boucle}(\Theta) = \mathbf{k}_H(\Theta)^H \mathbf{u} \quad \text{et} \quad G_H^{boucle}(\Theta) = -\mathbf{k}_V(\Theta)^H \mathbf{u} \qquad (26)$$

où $\mathbf{u}^H\mathbf{u}$ =1. Le gain du dipôle a alors l'expression suivante :

$$G^{boucle}(\Theta,\mathbf{p}) = \mathbf{u}^H \mathbf{H}(\Theta,\mathbf{p}) = p_V \times G_V^{boucle}(\Theta) + p_H \times G_H^{boucle}(\Theta) \qquad (27)$$

Où $\mathbf{p} = [p_H \, p_V]^T$ sachant que $p_V$ et $p_H$ sont respectivement les composantes en polarisation V et H du dipôle. La figure 7 montre que la tension $V(t)$ obtenue aux deux extrémités du dipôle est proportionnelle à $G^{dipole}(\Theta, \mathbf{P})$.

**Cas général**

Dans le cas général, on a montré à partir de simulation électromagnétique qu'une petite antenne se décompose suivant 3 dipôles et 3 boucles orthogonales comme l'indique la figure 3. Les gains Ex, Ey, Ez sont les composantes électriques suivant les axes x, y et z et correspondent aux gains des dipôles suivants ces trois axes. Les gains Mx, My, Mz sont les composantes magnétiques suivant les axes x, y et z et correspondent aux gains des dipôles suivants ces trois axes. Une antenne quelconque peut alors se modéliser comme la préformation de voie d'un réseau colocalisé composé de 3 dipôles et 3 boucles.

En conséquence, le gain d'un élément rayonnant quelconque s'écrit de la manière suivante en fonction d'une direction $\Theta$ et d'une polarisation $\mathbf{p}$ :

$$G(\Theta, \mathbf{p}) = E_x G_x^{dipole}(\Theta, \mathbf{p}) + E_y G_y^{dipole}(\Theta, \mathbf{p}) + E_z G_z^{dipole}(\Theta, \mathbf{p})$$
$$+ M_x G_x^{boucle}(\Theta, \mathbf{p}) + E_y G_y^{boucle}(\Theta, \mathbf{p}) + E_z G_z^{boucle}(\Theta, \mathbf{p}) \qquad (28)$$

OÙ $G_x^{dipole}(\Theta, \mathbf{p})$, $G_y^{dipole}(\Theta, \mathbf{p})$ et $G_z^{dipole}(\Theta, \mathbf{p})$ sont les gains respectifs des di-pôles de directions x, y et z qui sont connus et $G_x^{boucle}(\Theta, \mathbf{p})$, $G_y^{dipole}(\Theta, \mathbf{p})$ et $G_z^{dipole}(\Theta, \mathbf{p})$ sont les gains des boucles de directions respectives x, y et z qui sont aussi connus. L'expression (28) du gain peut s'écrire de la manière suivante :

$$G(\Theta, \mathbf{p}) = \mathbf{g}(\Theta, \mathbf{p})\mathbf{c} \text{ avec } \mathbf{c} = \begin{bmatrix} E_x \\ E_y \\ E_z \\ M_x \\ M_y \\ M_z \end{bmatrix} \qquad (29)$$

La polarisation $\mathbf{p}_k$ d'une onde émise par l'antenne de gain $G(\Theta, \mathbf{p}_0 = [1\ 1]^T)$ dans la direction $\Theta_k$ a pour expression :

$$\mathbf{p}_k = \mathbf{U}(\Theta_k)\mathbf{c} \quad \text{avec} \quad \mathbf{U}(\Theta_k) = \begin{bmatrix} \mathbf{g}(\Theta_k, \mathbf{e}_1) \\ \mathbf{g}(\Theta_k, \mathbf{e}_2) \end{bmatrix} \quad \mathbf{e}_1 = \begin{bmatrix} 1 \\ 0 \end{bmatrix} \text{ et } \mathbf{e}_2 = \begin{bmatrix} 0 \\ 1 \end{bmatrix} \qquad (30)$$

et le modèle de l'équation (1) est alors validé avec une expression de la matrice $\mathbf{U}(\Theta)$ en fonction de $\Theta$ parfaitement connu.

Le procédé et son système associé présentent notamment les avantages suivants :

- garder en termes de performances les avantages de la géo-localisation des procédés connus de l'art antérieur avec un grand réseau lacunaire.
- prendre en compte le cas d'un réseau d'antennes à diversité de polarisation dont la réponse dépend de deux polarisations orthogonales qui ont été mesurées par un processus de calibration.

**Revendications**

1. Procédé pour estimer la position $\mathbf{E}_m$ d'un émetteur comprenant une antenne d'émission à partir d'un réseau de capteurs (3) en mouvement installé sur un porteur (2), comportant en combinaison au moins les étapes suivantes :

   a) on détermine un ensemble de vecteurs directeurs $\{\hat{\mathbf{a}}_{m1}, ..., \hat{\mathbf{a}}_{mL}\}$ correspondant à la réponse du réseau de capteurs du porteur à un émetteur de position $\mathbf{E}_m$ de directions $(\Theta_k \, \Delta_k)$ et de polarisation $\mathbf{p}_k$ pour $1 \leq k \leq L$,
   b) on construit un vecteur normalisé $\hat{\mathbf{b}}_{mk}$,

correspondant à une mesure bruitée $\hat{\mathbf{a}}_{mk}$ du vecteur directeur qui est la réponse du réseau d'antennes à l'instant $t_k$ d'un émetteur de position $\mathbf{E}_m$ dont l'antenne d'émission est paramétrée par les coefficients $\mathbf{c}_m$ à partir des valeurs estimées des vecteurs directeurs $\{\hat{\mathbf{a}}_{m1}, ..., \hat{\mathbf{a}}_{mL}\}$,

**caractérisé en ce que** :

c) on construit un « grand vecteur observation » en considérant L observations pour l'émetteur de position $\mathbf{E}_m$ pour L instants $t_k$ qui se modélise par

$$\hat{\mathbf{b}}_L = \begin{bmatrix} \hat{\mathbf{b}}_{m1} \\ \vdots \\ \hat{\mathbf{b}}_{mL} \end{bmatrix} = \mathbf{b}_L\left(\mathbf{E}_m, \mathbf{c}_m\right) + \tilde{\mathbf{e}}_L \quad \text{avec} \quad \mathbf{b}_L\left(\mathbf{E}_m, \mathbf{c}_m\right) = \begin{bmatrix} \mathbf{b}\left(\mathbf{E}, t_1, \mathbf{c}\right) \\ \vdots \\ \mathbf{b}\left(\mathbf{E}, t_L, \mathbf{c}\right) \end{bmatrix}$$

$\mathbf{c}_m$ correspond aux paramètres de l'antenne de l'émetteur et $\tilde{\mathbf{e}}_L$ est le bruit de mesure des vecteurs directeurs du réseau de capteurs,

d) on détermine la position $\mathbf{E}_m$ de l'émetteur en recherchant les paramètres $\mathbf{E}_m$ et $\mathbf{c}_m$ de l'antenne d'émission de l'émetteur qui, sur un ensemble des paramètres (E, c), maximise la corrélation entre la mesure $\hat{\mathbf{b}}_L$ du grand vecteur d'observation et le vecteur modélisé $\mathbf{b}_L(\mathbf{E},\mathbf{c})$ paramétré par les valeurs possibles de position $\mathbf{E}$ et les paramètres $\mathbf{c}$ de l'antenne d'émission de l'émetteur à localiser :

$$\left(\hat{\mathbf{E}}_m, \hat{\mathbf{c}}_m\right) = \max_{\left(\mathbf{E}_m, \mathbf{c}_m\right)} J_L\left(\mathbf{E}, \mathbf{c}\right) \quad \text{avec} \quad J_L\left(\mathbf{E}, \mathbf{c}\right) = \frac{\left|\mathbf{b}_L\left(\mathbf{E}, \mathbf{c}\right)^H \hat{\mathbf{b}}_L\right|^2}{\left(\hat{\mathbf{b}}_L^H \hat{\mathbf{b}}_L\right)\left(\mathbf{b}_L\left(\mathbf{E}, \mathbf{c}\right)^H \mathbf{b}_L\left(\mathbf{E}, \mathbf{c}\right)\right)}$$

où H en exposant correspond à la transposée.

2.  Procédé selon la revendication 1 **caractérisé en ce qu'**il comporte les étapes suivantes :

exprimer le « grand vecteur d'observation » à l'aide d'une part d'un vecteur $\mathbf{v}_L(\mathbf{E},\mathbf{c},\hat{\mathbf{b}}_L)$ dépendant des positions de l'émetteur et des mesures du vecteur $V_L(\mathbf{E},\hat{\mathbf{b}}_L)$ et d'autre part des paramètres $\mathbf{c}$ de modélisation de l'antenne de l'émetteur,

$$\mathbf{v}_L\left(\mathbf{E}, \mathbf{c}, \hat{\mathbf{b}}_L\right) = \begin{bmatrix} \hat{\mathbf{b}}_1\left(\mathbf{E}, \mathbf{c}, \hat{\mathbf{b}}_{m1}\right) \\ \vdots \\ \hat{\mathbf{b}}_L\left(\mathbf{E}, \mathbf{c}, \hat{\mathbf{b}}_{mL}\right) \end{bmatrix} = V_L\left(\mathbf{E}, \hat{\mathbf{b}}_L\right)\mathbf{c}$$

estimer en modélisant $\mathbf{v}_L(\mathbf{E},\mathbf{c},\hat{\mathbf{b}}_L) = V_L(\mathbf{E},\hat{\mathbf{b}}_L)\mathbf{c}$, le maximum du critère dépendant uniquement les valeurs de position $\mathbf{E}$ possibles pour l'émetteur.:

$$\hat{\mathbf{E}}_m = \max_{\left(\mathbf{E}_m\right)} C_L^{opt}\left(\mathbf{E}\right) \quad \text{sachant} \quad C_L^{opt}\left(\mathbf{E}\right) = \max_{\mathbf{c}} \left( \frac{\left|\hat{\mathbf{b}}_L^H \mathbf{v}_L\left(\mathbf{E}, \mathbf{c}, \hat{\mathbf{b}}_L\right)\right|^2}{\left(\hat{\mathbf{b}}_L^H \hat{\mathbf{b}}_L\right)\left(\mathbf{v}_L\left(\mathbf{E}, \mathbf{c}, \hat{\mathbf{b}}_L\right)^H \mathbf{v}_L\left(\mathbf{E}, \mathbf{c}, \hat{\mathbf{b}}_L\right)\right)} \right)$$

où $\hat{\mathbf{b}}_L$ est le grand vecteur d'observation, $\mathbf{b}_L(\mathbf{E},\mathbf{c})$ le vecteur modélisé paramétré par les valeurs possibles de position $\mathbf{E}$ et les paramètres $\mathbf{c}$ de l'antenne d'émission de l'émetteur à localiser, afin de déterminer la position $\mathbf{E}_m$ de l'émetteur.

3. Procédé selon la revendication 2 **caractérisé en ce que** ledit critère $C_L^{opt}(\mathbf{E})$ est obtenu en utilisant les propriétés sur les formes quadratiques du critère de Ferrara

4. Procédé selon la revendication 1 **caractérisé en ce que** l'on modélise le vecteur de polarisation en utilisant une matrice dont les composantes correspondent aux réponses en polarisation d'une antenne modélisée par 3 boucles et 3 dipôles et un vecteur constant des paramètres de l'antenne d'émission et l'on exprime la relation de la manière suivante :

$$\mathbf{p}_k = \mathbf{U}(\Theta_k)\mathbf{c} \quad \text{où} \quad \mathbf{c} = \begin{bmatrix} E_x \\ E_y \\ E_z \\ M_x \\ M_y \\ M_z \end{bmatrix}$$

où $\mathbf{c}$ est un vecteur constant dépendant des paramètres inconnus de l'antenne d'émission et où $\mathbf{U}(\Theta)$ est une matrice de dimension 2x6 dont les composantes correspondent aux incidences connues.

5. Procédé selon l'une des revendications 1 à 4 **caractérisé en ce qu'**il comporte une étape de détermination des paramètres de l'antenne d'émission à partir de la connaissance de sa position.

6. Système pour estimer la position d'un émetteur E à partir d'un réseau de capteurs en mouvement installé sur un porteur, ledit émetteur comprenant une antenne d'émission, ledit porteur comprenant un dispositif de traitement des signaux émis par l'émetteur adapté à exécuter les étapes du procédé selon l'une des revendications 1 à 5.

7. Utilisation du procédé selon l'une des revendications 1 à 5 et du système selon la revendication 6 pour localiser des sources émettrices dans un réseau de communications.

**Patentansprüche**

1. Verfahren zum Schätzen der Position $E_m$ eines Senders mit einer Sendeantenne, ausgehend von einem Netz von Sensoren (3) in Bewegung, das auf einem Träger (2) installiert ist, wobei es in Kombination mindestens die folgenden Schritte aufweist:

a) Ermitteln einer Gesamtheit von Richtungsvektoren $\{\hat{a}_{ml},...,\hat{a}_{mL}\}$, die der Antwort des Sensorennetzes des Trägers an einen Sender einer Position $\mathbf{E}_m$ von Richtungen $(\Theta_k, \Delta_k)$ und einer Polarisation $p_k$ für $1{\le}k{\le}L$ entsprechen,
b) Erstellen eines normalisierten Vektors $\hat{b}_{mk}$,
der einer Rauschmessung $\hat{a}_{mk}$ des Richtungsvektors entspricht, der die Antwort des Antennennetzes zum Zeitpunkt $t_k$ eines Senders von Position $\mathbf{E}_m$ ist, dessen Sendeantenne durch die Koeffizienten $c_m$ parametrisiert ist, ausgehend von den geschätzten Werten der Richtungsvektoren $\{\hat{a}_{ml}, ..., \hat{a}_{mL}\}$,
**dadurch gekennzeichnet, dass**
c) ein "großer Beobachtungsvektor" erstellt wird unter Berücksichtigung von L Beobachtungen für den Sender von Position $E_m$ für L Zeitpunkte $t_k$, der modelliert wird durch

$$\hat{\mathbf{b}}_L = \begin{bmatrix} \hat{\mathbf{b}}_{m1} \\ \vdots \\ \hat{\mathbf{b}}_{mL} \end{bmatrix} = \mathbf{b}_L\left(\mathbf{E}_m,\mathbf{c}_m\right) + \tilde{\mathbf{e}}_L \quad \text{mit} \quad \mathbf{b}_L\left(\mathbf{E}_m,\mathbf{c}_m\right) = \begin{bmatrix} \mathbf{b}\left(\mathbf{E},t_1,\mathbf{c}\right) \\ \vdots \\ \mathbf{b}\left(\mathbf{E},t_L,\mathbf{c}\right) \end{bmatrix}$$

wobei $c_m$ den Parametern der Antenne des Senders entspricht, und $\tilde{e}_L$ das Messungsrauschen der Richtungsvektoren des Sensorennetzes ist,

d) die Position $\mathbf{E}_m$ des Senders ermittelt wird durch Untersuchen der Parameter $E_m$ und $c_m$ der Sendeantenne des Senders, die aus einer Gesamtheit der Parameter (E,c) die Korrelation zwischen der Messung $\hat{\mathbf{b}}_L$ des großen Beobachtungsvektors und dem modellierten Vektor $b_L(E,c)$ maximiert, der durch die möglichen Positionswerte E und die Parameter c der Sendeantenne des zu lokalisierenden Senders parametrisiert wird:

$$\left(\hat{\mathbf{E}}_m,\hat{\mathbf{c}}_m\right) = \max_{\left(\mathbf{E}_m,\mathbf{c}_m\right)} J_L\left(\mathbf{E},\mathbf{c}\right) \quad \text{mit} \quad J_L\left(\mathbf{E},\mathbf{c}\right) = \frac{\left|\mathbf{b}_L\left(\mathbf{E},\mathbf{c}\right)^H \hat{\mathbf{b}}_L\right|^2}{\left(\hat{\mathbf{b}}_L{}^H\hat{\mathbf{b}}_L\right)\left(\mathbf{b}_L\left(\mathbf{E},\mathbf{c}\right)^H \mathbf{b}_L\left(\mathbf{E},\mathbf{c}\right)\right)}$$

wobei $^H$ in Hochstellung der transponierten Matrix entspricht.

2. Verfahren nach Anspruch 1, **dadurch gekennzeichnet, dass** es die folgenden Schritte aufweist:

Ausdrücken des "großen Beobachtungsvektors" mithilfe einerseits eines Vektors $v_L$ $(E,c,\hat{\mathbf{b}}_L)$, der von den Positionen des Senders und den Messungen des Vektors $V_L(E,\hat{\mathbf{b}}_L)$ abhängt und andererseits der Modellierungsparametern c der Antenne des Senders,

$$\mathbf{v}_L\left(\mathbf{E},\mathbf{c},\hat{\mathbf{b}}_L\right) = \begin{bmatrix} \hat{\mathbf{b}}_1\left(\mathbf{E},\mathbf{c},\hat{\mathbf{b}}_{m1}\right) \\ \vdots \\ \hat{\mathbf{b}}_L\left(\mathbf{E},\mathbf{c},\hat{\mathbf{b}}_{mL}\right) \end{bmatrix} = \mathbf{V}_L\left(\mathbf{E},\hat{\mathbf{b}}_L\right)\mathbf{c}$$

durch Modellieren von $\mathbf{v}_L(\mathbf{E},\mathbf{c},\hat{\mathbf{b}}_\mathbf{L}) = \mathbf{V}_L(\mathbf{E},\hat{\mathbf{b}}_\mathbf{L})\mathbf{c}$ Schätzen des Höchstwerts des Kriteriums, der allein von den möglichen Positionswerten E für den Sender abhängt:

$$\hat{\mathbf{E}}_m = \max_{\left(\mathbf{E}_m\right)} C_L{}^{opt}\left(\mathbf{E}\right) \quad \text{wobei} \quad C_L{}^{opt}\left(\mathbf{E}\right) = \max_{\mathbf{c}}\left(\frac{\left|\hat{\mathbf{b}}_L{}^H \mathbf{v}_L\left(\mathbf{E},\mathbf{c},\hat{\mathbf{b}}_L\right)\right|^2}{\left(\hat{\mathbf{b}}_L{}^H\hat{\mathbf{b}}_L\right)\left(\mathbf{v}_L\left(\mathbf{E},\mathbf{c},\hat{\mathbf{b}}_L\right)^H \mathbf{v}_L\left(\mathbf{E},\mathbf{c},\hat{\mathbf{b}}_L\right)\right)}\right)$$

wobei $\hat{\mathbf{b}}_L$ der große Beobachtungsvektor ist, $b_L$ $(E,c)$ der durch die möglichen Positionswerte E modellierte parametrisierte Vektor und die Parameter c der Sendeantenne des zu lokalisierenden Senders ist, um die Position $\mathbf{E}_m$ des Senders zu ermitteln, wobei $^H$ in Hochstellung der transponierten Matrix entspricht.

3. Verfahren nach Anspruch 2, **dadurch gekennzeichnet, dass** das Kriterium $C_L{}^{opt}(E)$ unter Verwendung der Eigenschaften auf den quadratischen Formen des Ferrara-Kriteriums erhalten wird.

4. Verfahren nach Anspruch 1, **dadurch gekennzeichnet, dass** der Polarisierungsvektor unter Verwendung einer Matrix modelliert wird, deren Komponenten den Polarisierungsantworten einer Antenne entsprechen, die durch 3 Schleifen und 3 Dipole und einen konstanten Vektor der Parameter der Sendeantenne modelliert wird, und die Relation wie folgt ausgedrückt wird:

$$\mathbf{p}_k = \mathbf{U}\left(\Theta_k\right)\mathbf{c} \quad \text{wo} \quad \mathbf{c} = \begin{bmatrix} E_x \\ E_y \\ E_z \\ M_x \\ M_y \\ M_z \end{bmatrix}$$

wobei c ein konstanter Vektor ist, der von unbekannten Parametern der Sendeantenne abhängt, und wobei $\mathbf{U}(\Theta)$ eine Matrix der Größe 2x6 ist, deren Komponenten den bekannten Ereignissen entsprechen.

5. Verfahren nach einem der Ansprüche 1 bis 4, **dadurch gekennzeichnet, dass** es einen Schritt zur Ermittlung der Parameter der Sendeantenne ausgehend von der Kenntnis ihrer Position aufweist.

6. System zum Schätzen der Position eines Senders E, ausgehend von einem Netz von Sensoren in Bewegung, das auf einem Träger installiert ist, wobei der Sender eine Sendeantenne aufweist, der Träger eine Verarbeitungsvorrichtung der Signale aufweist, die durch den Sender gesendet werden, der so angepasst ist, dass er die Schritte des Verfahrens gemäß einem der Ansprüche 1 bis 5 ausführt.

7. Verwendung des Verfahrens nach einem der Ansprüche 1 bis 5 und des Systems nach Anspruch 6 zum Lokalisieren der Senderquellen in einem Kommunikationsnetz.

**Claims**

1. Method for estimating the position $\mathbf{E}_m$ of a transmitter comprising a transmit antenna on the basis of a moving sensor network (3) installed on a carrier (2), comprising, in combination, at least the following steps:

    a) determining a set of direction vectors $\{\hat{a}_{ml}, ..., a_{mL}\}$ corresponding to the response of the sensor network of the carrier to a transmitter having a position $\mathbf{E}_m$, direction $(\Theta_k, \Delta_k)$ and polarization $\mathbf{p}_k$ for $1 \leq k \leq L$,
    b) constructing a normalized vector $\hat{\mathbf{b}}_{mk}$, corresponding to a noisy measurement $\hat{\mathbf{a}}_{mk}$ of the direction vector which is the response of the antenna network at the time $t_k$ of a transmitter having a position $\mathbf{E}_m$ of which the transmit antenna is parameterized by the coefficients $\mathbf{c}_m$ on the basis of estimated values of the direction vectors $\{\hat{a}_{ml}, ..., \hat{a}_{mL}\}$,
    **characterized in that**
    c) constructing a "large observation vector" by considering L observations for the transmitter having a position $\mathbf{E}_m$ for L times $t_k$ which is modelled by

$$\hat{\mathbf{b}}_L = \begin{bmatrix} \hat{\mathbf{b}}_{m1} \\ \vdots \\ \hat{\mathbf{b}}_{mL} \end{bmatrix} = \mathbf{b}_L\left(\mathbf{E}_m, \mathbf{c}_m\right) + \tilde{e}_L \quad \text{where} \quad \mathbf{b}_L\left(\mathbf{E}_m, \mathbf{c}_m\right) = \begin{bmatrix} \mathbf{b}\left(\mathbf{E}, t_1, \mathbf{c}\right) \\ \vdots \\ \mathbf{b}\left(\mathbf{E}, t_L, \mathbf{c}\right) \end{bmatrix}$$

$\mathbf{c}_m$ corresponds to the parameters of the antenna of the transmitter and $\hat{e}_L$ is the measurement noise of the direction vectors of the sensor network,
    d) determining the position $\mathbf{E}_m$ of the transmitter by identifying the parameters $\mathbf{E}_m$ and $\mathbf{c}_m$ of the transmit antenna of the transmitter which, from a set of parameters (E, c), maximizes the correlation between the measurement $\hat{\mathbf{b}}_L$ of the large observation vector and the modelled vector $\mathbf{b}_L(\mathbf{E}, \mathbf{c})$ parameterized by the possible values of position $\mathbf{E}$ and the parameters $\mathbf{c}$ of the transmit antenna of the transmitter to be located:

$$\left(\hat{\mathbf{E}}_{m},\hat{\mathbf{c}}_{m}\right)=\max_{\left(\mathbf{E}_{m},\mathbf{c}_{m}\right)}J_{L}\left(\mathbf{E},\mathbf{c}\right) \quad \text{where} \quad J_{L}\left(\mathbf{E},\mathbf{c}\right)=\frac{\left|\mathbf{b}_{L}\left(\mathbf{E},\mathbf{c}\right)^{H}\hat{\mathbf{b}}_{L}\right|^{2}}{\left(\hat{\mathbf{b}}_{L}^{H}\hat{\mathbf{b}}_{L}\right)\left(\mathbf{b}_{L}\left(\mathbf{E},\mathbf{c}\right)^{H}\mathbf{b}_{L}\left(\mathbf{E},\mathbf{c}\right)\right)}$$

with superscript $^H$ corresponds to the transpose.

2. Method according to Claim 1, **characterized in that** it comprises the following steps:

expressing the "large observation vector" using, on the one hand, a vector $v_L(\mathbf{E},\mathbf{c},\hat{b}_L)$ dependent on the positions of the transmitter and the measurements of the vector $\mathbf{V}_L(\mathbf{E},\hat{b}_L)$ and, on the other hand, the modelling parameters c of the antenna of the transmitter:

$$\mathbf{v}_{L}\left(\mathbf{E},\mathbf{c},\hat{\mathbf{b}}_{L}\right)=\begin{bmatrix}\hat{\mathbf{b}}_{1}\left(\mathbf{E},\mathbf{c},\hat{\mathbf{b}}_{m1}\right)\\ \vdots \\ \hat{\mathbf{b}}_{L}\left(\mathbf{E},\mathbf{c},\hat{\mathbf{b}}_{mL}\right)\end{bmatrix}=\mathbf{V}_{L}\left(\mathbf{E},\hat{\mathbf{b}}_{L}\right)\mathbf{c}$$

estimating, by modelling $\mathbf{v}_L(\mathbf{E},\mathbf{c},\hat{b}_L) = V_L(\mathbf{E},\hat{b}_L)\mathbf{c}$, the maximum of the criterion dependent only on the possible values of position $\mathbf{E}$ for the transmitter:

$$\hat{\mathbf{E}}_{m}=\max_{\left(\mathbf{E}_{m}\right)}C_{L}^{\;opt}\left(\mathbf{E}\right) \quad \text{knowing} \quad C_{L}^{\;opt}\left(\mathbf{E}\right)=\max_{\mathbf{c}}\left(\frac{\left|\hat{\mathbf{b}}_{L}^{H}\mathbf{v}_{L}\left(\mathbf{E},\mathbf{c},\hat{\mathbf{b}}_{L}\right)\right|^{2}}{\left(\hat{\mathbf{b}}_{L}^{H}\hat{\mathbf{b}}_{L}\right)\left(\mathbf{v}_{L}\left(\mathbf{E},\mathbf{c},\hat{\mathbf{b}}_{L}\right)^{H}\mathbf{v}_{L}\left(\mathbf{E},\mathbf{c},\hat{\mathbf{b}}_{L}\right)\right)}\right)$$

where $\hat{b}_L$ is the large observation vector, $b_L(\mathbf{E},\mathbf{c})$ the modelled vector parameterized by the possible values of position $\mathbf{E}$ and the parameters $\mathbf{c}$ of the transmit antenna of the transmitter to be located, superscript $^H$ corresponds to the transpose, in order to determine the position $\mathbf{E}_m$ of the transmitter.

3. Method according to Claim 2, **characterized in that** said criterion $C_L^{opt}(\mathbf{E})$ is obtained by using the properties on the quadratic forms of the Ferrara criterion.

4. Method according to Claim 1, **characterized in that** the polarization vector is modelled using a matrix of which the components correspond to the polarization responses of an antenna modelled by 3 loops and 3 dipoles and a constant vector of the parameters of the transmit antenna, and the relation is expressed in the following manner:

$$\mathbf{p}_{k}=\mathbf{U}\left(\Theta_{k}\right)\mathbf{c} \quad \text{where} \quad \mathbf{c}=\begin{bmatrix}E_{x}\\ E_{y}\\ E_{z}\\ M_{x}\\ M_{y}\\ M_{z}\end{bmatrix} \quad ,$$

where $\mathbf{c}$ is a constant vector dependent on the unknown parameters of the transmit antenna and where $\mathbf{U}(\Theta)$ is a

matrix with a dimension of 2x6, the components of which correspond to the known incidences.

5. Method according to one of Claims 1 to 4, **characterized in that** it comprises a step of determining the parameters of the transmit antenna on the basis of the knowledge of its position.

6. System for estimating the position of a transmitter E on the basis of a moving sensor network installed on a carrier, said transmitter comprising a transmit antenna, said carrier comprising a device for processing the signals transmitted by the transmitter suitable for carrying out the steps of the method according to one of Claims 1 to 5.

7. Use of the method according to one of Claims 1 to 5 and the system according to Claim 6 to locate the transmitting sources in a communications network.

FIG.1

FIG.2

FIG.3

FIG.4

k(θ,Δ) : Vecteur d'onde

FIG.5A

k(θ,Δ) : Vecteur d'onde

FIG.5B

$V(t) = G^{dipôle}(\theta, \Delta) s(t)$

Dipôle

$k(\theta, \Delta)$

$s(t)$

u

**FIG.6**

$V(t) = G^{boucle}(\theta, \Delta) s(t)$

Boucle

$k(\theta, \Delta)$

E

H

$s(t)$

u

**FIG.7**

## RÉFÉRENCES CITÉES DANS LA DESCRIPTION

**Documents brevets cités dans la description**

- US 7400297 B
- US 7907089 B
- US 7952521 B
- WO 2007047119 A
- US 7242350 B

**Littérature non-brevet citée dans la description**

- **E. R. FERRARA ; T. M. PARKS.** Direction finding with an array of antennas having diverse polarizations. *IEEE Trans. Antennas. Propagation.,* Mars 1983, vol. 31, 231-236